(19) Europäisches Patentamt / European Patent Office / Office européen des brevets

(11) **EP 2 862 963 A1**

(12) **EUROPEAN PATENT APPLICATION**
published in accordance with Art. 153(4) EPC

(43) Date of publication:
**22.04.2015 Bulletin 2015/17**

(21) Application number: **12878963.3**

(22) Date of filing: **14.06.2012**

(51) Int Cl.:
*D01F 6/46* $^{(2006.01)}$          *C08L 23/00* $^{(2006.01)}$
*D04H 1/544* $^{(2012.01)}$          *H01M 2/16* $^{(2006.01)}$

(86) International application number:
**PCT/JP2012/065223**

(87) International publication number:
**WO 2013/186892 (19.12.2013 Gazette 2013/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nippon Kodoshi Corporation Kochi-shi, Kochi 781-0395 (JP)**

(72) Inventors:
• **NISHIZAKA Kohei**
  **Kochi-shi**
  **Kochi 781-0395 (JP)**

• **MIZOBUCHI Akio**
  **Kochi-shi**
  **Kochi 781-0395 (JP)**
• **YAMASAKI Yasuhisa**
  **Kochi-shi**
  **Kochi 781-0395 (JP)**

(74) Representative: **Müller-Boré & Partner Patentanwälte PartG mbB Friedenheimer Brücke 21 80639 München (DE)**

(54) **FIBER USING OLEFIN RESIN, NONWOVEN FABRIC USING SAME, AND SEPARATOR FOR ALKALI STORAGE BATTERY**

(57)     There is provided a low-cost alkaline storage battery separator capable of implementing stable fiber spinning and excellent ammonia trapping function so as to control self-discharge. Spinning fiber using resin including 1.0 mass % or greater of low crystalline polyolefin, crystalline polyolefin and maleic anhydride-modified polyolefin corresponding to a maleic anhydride component content of 3.5 to 35 mass % in the fiber assures stability during fiber spinning. Moreover, making a nonwoven fabric using the fiber act as a separator allows a high level of ammonia trapping function and controls self-discharge of the alkaline storage battery.

START

→ Cut separator — S1

→ Wind and overlap positive electrode material, negative electrode material, and nonwoven fabric separator — S2

→ Store in battery case — S3

→ Connect electrode materials to electrodes — S4

→ Inject electrolyte into battery case — S5

→ Seal liquid injecting port of battery case with battery case lid — S6

→ Battery completed

FIG. 2

EP 2 862 963 A1

**Description**

TECHNICAL FIELD

The present invention relates to polyolefin resin, a fiber using the resin, a nonwoven fabric using the resin or the fiber, an alkaline storage battery separator using the nonwoven fabric, and an alkaline storage battery.

BACKGROUND ART

Alkaline storage batteries, such as nickel-metal hydride battery are widely used in digital cameras, portable music players, hybrid cars, and notebook personal computers, or as a substitute to primary batteries. Advantages of the nickel-metal hydride battery are that it can be used repeatedly because it can be charged and discharged approximately 1000 cycles, it has a volume energy density of approximately 300 Wh/L, it has a greater capacity than the nickel cadmium storage battery, it has less environmental burden than the nickel cadmium storage battery because it does not contain cadmium, and it can reduce running costs more than primary batteries such as a zinc-carbon battery or an alkaline battery.

A desired function of a separator used in such a nickel-metal hydride battery is control of self-discharge of the nickel-metal hydride battery. There are several known factors in self-discharge of a battery.

For example, Non-Patent Document 1 describes that in an alkaline storage battery, specifically a nickel-metal hydride battery, a key factor in self-discharge is that a nitrogen compound existing as an impurity in the battery system goes back and forth between a positive electrode and a negative electrode so as to repeat an oxidation-reduction reaction, thereby accelerating self-discharge catalytically. This reaction is typically called a nitrogen shuttle reaction.

Non-Patent Document 1 describes that a factor in self-discharge of the nickel-metal hydride battery is that ammonia is generated in the battery, much of which is derived from nickel hydroxide or a positive electrode active material. Under normal conditions, it is thought that if prevention of nitrogen compounds from getting mixed during the manufacturing process of battery materials is possible, self-discharge can be controlled; however, keeping any nitrogen compounds from getting mixed is industrially unrealistic. Conventionally, a polyamide nonwoven fabric with an excellent hydrophilic property has been used as this type of alkaline storage battery separator.

However, with the polyamide nonwoven fabric separator, problems that the separator itself is gradually decomposed in an alkaline electrolyte solution, and self-discharge is increased due to the aforementioned nitrogen shuttle reaction through which ammonia generated during the decomposition is oxidized to nitrate ions on the positive electrode and reduced on the negative electrode back into ammonia has been revealed (Non-Patent Document 2).

As a result, a polyolefin nonwoven fabric separator with excellent chemical stability is used instead of the polyamide nonwoven fabric separator. However, since the polyolefin nonwoven fabric separator is less hydrophilic than the polyamide nonwoven fabric separator, the following various hydrophilic treatments are absolutely imperative.

(1) Surface active agent treatment

This is a comparatively easy method for applying a surface active agent on the separator. More specifically, this is a method for coating an acetylene glycol based nonionic surface active agent including a polyalkylene oxide group in molecule (Patent Document 1).

(2) Corona discharge treatment, plasma processing

This is a low-price processing method for introducing a hydrophilic group, such as a carboxyl group, on the resin surface by a radical generated through each method. More specifically, in a corona discharge treatment, corona discharge radiated by a high-frequency high-voltage pulse electric field is irradiated on a material to be treated (Patent Document 2).

In plasma processing, plasma discharge is generated by applying an electric field between paired electrodes that are facing each other, so as to impart hydrophilicity to the material to be treated (Patent Document 3).

(3) Fluorine gas treatment

This is a method for introducing a carboxyl group on the fiber surface using the oxidizing power of fluorine gas. As a specific fluorine gas treatment method, there is a method for bringing a nonwoven fabric into contact with a mixed gas of fluorine and oxygen so as to introduce the carboxyl group onto the fiber surface.

(4) Acrylic acid graft polymerization

This is a method of graft polymerizing acrylic acid onto a fiber so as to impart hydrophilicity thereto. More specifically, there is a method of graft polymerizing acrylic acid by immersing a nonwoven fabric in a mixed solution of water as a solvent, benzophenone as a polymerization initiator, and acrylic acid as a vinyl monomer, and irradiating ultraviolet light thereupon for several minutes using a mercury lamp in a nitrogen atmosphere (Patent Document 4).

(5) Sulfonation

This is a method of introducing a sulfonic acid group onto fiber so as to impart hydrophilicity thereto. More specifically, there are methods of sulfonation by immersing a nonwoven fabric in hot concentrated sulfuric acid or fuming sulfuric acid (Patent Documents 5 and 6), and methods of sulfonation by bringing a nonwoven fabric into contact with sulfur trioxide gas (Patent Documents 7 and 8), etc.

Of the above hydrophilic treatments, only the acrylic acid graft polymerization and the sulfonation can impart an ammonia trapping function to the separator. Non-Patent Document 1 describes that the separator that has acrylic acid graft polymerized onto a polyolefin nonwoven fabric has ammonia trapping function, and may control self-discharge of a nickel-metal hydride battery better than the polyamide nonwoven fabric separator having no ammonia trapping function. The sulfonated polyolefin nonwoven fabric separator is thought to control self-discharge by ultimately trapping a nitrogen compound, as ammonium salt, mixed in the alkaline storage battery as an impurity, in a strongly acidic sulfonic acid group that is chemically bonded to the separator, so as to strongly inhibit the nitrogen-shuttle reaction.

Since the acrylic acid graft polymerization requires a monomer, a polymerization initiator, and a solvent, and exposure to ultraviolet radiation, neutralization, washing, drying, and waste liquid treatment are necessary, it is a complicated and costly process.

Careful handling is required in sulfonation since toxic and dangerous fuming sulfuric acid and sulfur trioxide gas are used. Moreover, it also requires sulfonation, dilution, primary washing, neutralization, secondary washing, drying, and waste acid treatment, and is therefore a complicated, troublesome process, needing attention in process control.

On the other hand, a nonwoven fabric separator made of fiber including maleic anhydride-modified polyolefin as a technology for imparting the function of trapping ammonia in a simple process is proposed (Patent Document 9).

Prior Art Documents

Patent Documents

Patent Document 1: JP 2000-164193A
Patent Document 2: JP 2001-043843A
Patent Document 3: JP 2001-068087A
Patent Document 4: JP H10-125300A
Patent Document 5: JP H07-32008A
Patent Document 6: Japanese Patent No. 2715153
Patent Document 7: Japanese Patent No. 2762443
Patent Document 8: Japanese Patent No. 2904856
Patent Document 9: JP 2007-308839A

Non-Patent Documents

Non-Patent Document 1: Patric Leblanc, et al., J. Electrochem., 145(3) p844-847 (1998)
Non-Patent Document 2: Yoshiharu Matsuda, Zenichiro Takehara, ed., Battery Handbook (2001), p237-238

DISCLOSURE OF THE INVENTION

Problem to be Solved by the Invention

Upon verification by the inventors, ammonia trapping capacity in the maleic anhydride content disclosed in Patent Document 9 is less than 0.3 mmol/g. If the ammonia trapping capacity is 0.3 mmol/g or greater, self-discharge can be controlled. However, the ammonia trapping capacity of Patent Document 9 dose not satisfy this value, and a nonwoven fabric separator sustainable in practical use is not provided. Note that the maleic anhydride content disclosed in Patent Document 9 is synonymous with the maleic anhydride component content by percentage according to the present invention.

Furthermore, while introduction of a maleic anhydride component content of 3.5 mass % or greater in the fiber is necessary for imparting ammonia trapping capacity of 0.3 mmol/g or greater, in practice, thread breaks during fiber spinning and fibers and nonwoven fabric cannot be manufactured stably. In other words, the upper limit of the maleic anhydride component content is limited, and thereby fibers and nonwoven fabric imparted with sufficient ammonia trapping capacity cannot be achieved.

Resin including 3.5 mass % or greater of the maleic anhydride component makes a continuous spinning difficult as it reduces melt viscosity of crystalline polyolefin and inhibits spinnability. With the separator of Patent Document 9, the self-discharge control function required by the nonwoven fabric separator for an alkaline storage battery is unsatisfactory.

The present invention aims to provide resin appropriate for a nonwoven fabric separator for an alkaline storage battery that is capable of controlling self-discharge, and to provide a fiber using the resin, a nonwoven fabric using the resin or the fiber, a separator using the nonwoven fabric, and an alkaline storage battery using the separator.

Means of Solving the Problem

The present invention includes the following structure as an aim to resolve the above problems. That is, an embodiment according to the present invention is a polyolefin resin available as a nonwoven fabric raw material characterized by including maleic anhydride-modified polyolefin, low crystalline polyolefin and crystalline polyolefin.

Moreover, for example, the polyolefin resin is characterized by including 3.5 to 35 mass % of a maleic anhydride component. Furthermore, it is characterized in that the low crystalline polyolefin is a polyolefin resin having less than 50 percent degree of crystallinity.

Furthermore, it is characterized by including 1.0 to 90 mass % of the low crystalline polyolefin. Yet further alternatively, it is characterized in that the low crystalline polyolefin is any one of polyethylene, polypropylene, polybutene, polymethylpentene, an ethylene-propylene copolymer, an ethylene-butene copolymer, a propylene-butene copolymer, or an ethylene-propylene-butene copolymer.

Yet furthermore, it is a polyolefin fiber characterized by being fabricated by spinning fibers from of any one of the above polyolefin resins. Yet furthermore, it is characterized in that the polyolefin fiber has a fiber diameter of 15 $\mu$m or less.

Yet furthermore, it is a nonwoven fabric characterized by using either the above polyolefin resin or polyolefin fiber. Yet further alternatively, it is characterized by being fabricated through any one of a spunbonding process, a melt blowing process, or a wet-laid process.

Yet furthermore, it is characterized in that at least one type of processing selected from a group of a surface active agent treatment, a corona discharge treatment, plasma processing, a UV ozone treatment, and a fluorine gas treatment is carried out. Yet furthermore, it is characterized by a nonwoven fabric constituted by a fiber having a fiber diameter of 1 to 15 $\mu$m, and having an ammonia trapping capacity of 0.3 to 6.0 mmol/ g.

An alkaline storage battery according to the present invention is characterized by using any one of the above nonwoven fabrics as a separator.

Results of the Invention

The present invention provides resin appropriate for a nonwoven fabric separator for an alkaline storage battery that is capable of controlling self-discharge of an alkaline storage battery, and further provides a fiber using the resin, a nonwoven fabric using the resin or the fiber, a separator using the nonwoven fabric, and an alkaline storage battery using the separator.

BRIEF DESCRIPTION OF DRAWINGS

FIG. 1 is a graph showing relationships between maleic anhydride component content and ammonia trapping capacity in nonwoven fabric separators of working examples according to the present invention, comparative examples, and conventional examples; and
FIG. 2 is a drawing for describing a manufacturing process of a battery of an embodiment.

EMBODIMENT OF THE INVENTION

An embodiment of the present invention is explained below in detail. According to this embodiment, a low-cost alkaline storage battery separator that is capable of implementing stable fiber spinning, has excellent ammonia trapping function, and is capable of controlling self-discharge may be provided.

In this embodiment, spinning fiber using resin including maleic anhydride-modified polyolefin corresponding to a maleic anhydride component content of 3.5 to 35 mass % in the fiber, and further including crystalline polyolefin and 1.0 mass % or greater of low crystalline polyolefin, assures stability during fiber spinning. Moreover, a nonwoven fabric using the fiber acting as a separator allows a high ammonia trapping function and control of self-discharge of the alkaline storage battery.

The structure of this embodiment is explained below in detail.

(Polyolefin resin)

The resin of this embodiment is polyolefin resin constituted by maleic anhydride-modified polyolefin, low crystalline polyolefin, and crystalline polyolefin. Spinning the resin allows provision of the fiber according to this embodiment and a nonwoven fabric constituted by the fiber.

The polyolefin resin preferably includes 3.5 to 35 mass % of the maleic anhydride component. When making a nonwoven fabric using the resin or the fiber with the maleic anhydride component of less than 3.5 mass %, the ammonia trapping capacity is insufficient.

On the other hand, since melt viscosity decreases when the maleic anhydride component exceeds 35 mass %, thread breaks and stable continuous spinning is difficult, and thus provision of a nonwoven fabric (separator) is difficult.

Moreover, the maleic anhydride component according to this embodiment is a portion having a structure deriving from maleic anhydride included in a blend of polyolefin resin modified by maleic anhydride, crystalline polyolefin, and low crystalline polyolefin.

As a method of including the maleic anhydride component in the resin, it is preferable to knead thermoplastic polyolefin resin with the resin modified by maleic anhydride but is not limited thereto.

Here, the low crystalline polyolefin according to this embodiment is resin of less than 50 percent degree of crystallinity. Examples of the low crystalline polyolefin are polyethylene, polypropylene, polybutene, an ethylene-propylene copolymer, an ethylene-butene copolymer, a propylene-butene copolymer, an ethylene-propylene-butene copolymer, etc. and it may be at least one type thereof.

Moreover, in this embodiment, it is preferable that 1.0 to 90 mass % of the low crystalline polyolefin is included therein. When the maleic anhydride component included in the maleic anhydride-modified polyolefin reaches 3.5 mass % or greater, the melt viscosity of the crystalline polyolefin decreases, and spinnability decreases as a result. In order to resolve this problem, 1.0 mass % or greater of the low crystalline polyolefin is included so as to maintain the melt viscosity for carrying out continuous spinning and thereby preventing decrease in spinnability.

In other words, with less than 1.0 mass % of the low crystalline polyolefin, the melt viscosity for carrying out continuous spinning cannot be maintained and decrease in spinnability cannot be prevented.

Furthermore, when the low crystalline polyolefin content exceeds 90 mass %, the maleic anhydride component is less than 3.5 mass %, whereby a sufficient ammonia trapping function for controlling self-discharge cannot be obtained.

Examples of the crystalline polyolefin are polyethylene, polypropylene, polybutene, polymethylpentene, an ethylene-propylene copolymer, an ethylene-butene copolymer, a propylene-butene copolymer, an ethylene-propylene-butene copolymer, etc. and it may be at least one type thereof.

Components of the resin for constituting the fiber according to this embodiment should include 3.5 to 35 mass % of the maleic anhydride component and 1.0 mass % or greater of the low crystalline polyolefin, but the content of the crystalline polyolefin is not particularly limited.

Manufacturing method of the resin according to this embodiment is not particularly limited. A typical method of mixing and fusing respective resins and then kneading and pelletizing it may be used.

(Polyolefin resin fiber)

A polyolefin fiber of this embodiment is made by spinning fibers from the aforementioned polyolefin resin. The fibers are spun from resin including maleic anhydride-modified polyolefin, low crystalline polyolefin and crystalline polyolefin, and controlled such that fiber diameter is 15 $\mu$m or less. If the fiber diameter is greater than 15 $\mu$m, there is a problem with the low short-circuit resistance characteristics of the separator fabricated by making the fiber into a nonwoven fabric.

More preferably, the separator is constituted by fibers having a fiber diameter of 10 $\mu$m or less so as to contribute to improvement in minuteness and thinning of the separator. Moreover, from an increase in fiber specific surface area, further improvement in ammonia trapping function is anticipated, and self-discharge property of a battery is further improved when the fiber is made into a nonwoven fabric as a battery separator.

Particularly, spinning fiber using resin into which a high content of 3.5 to 35 mass % of the maleic anhydride component is introduced, allows attainment of a nonwoven fabric with excellent ammonia trapping function and an alkaline storage battery using the nonwoven fabric as an alkaline storage battery separator.

That is, in this embodiment, by making fiber using thermoplastic polyolefin resin including 3.5 to 35 mass % of the maleic anhydride component and 1.0 mass % or greater of low crystalline polyolefin, a nonwoven fabric separator for alkaline storage battery capable of controlling self-discharge can be obtained.

This fiber is applicable to a nonwoven fabric obtained through a spunbonding process or a melt blowing process, and a wet-laid nonwoven fabric obtained through a wet-laid process.

(Nonwoven fabric)

The nonwoven fabric of this embodiment is made using either the polyolefin resin or the polyolefin fiber. More specifically, the nonwoven fabric is made through any one of the spunbonding process, the melt blowing process, or the wet-laid process.

In the case of manufacturing (fabricating) a nonwoven fabric using the spunbonding process or the melt blowing process, it should be constituted from any one of a single component fiber or a conjugate fiber including 3.5 to 35 mass % of the maleic anhydride component and 1.0 mass % or greater of low crystalline polyolefin.

In the case of manufacturing a nonwoven fabric using the wet-laid process, it should be constituted by at least one or more of a single component fiber, a conjugate fiber, or a splittable fiber. The finished nonwoven fabric should include 3.5 to 35 mass % of the maleic anhydride component and 1.0 mass % or greater of low crystalline polyolefin, and other fibers may be applied according to properties of the desired nonwoven fabric separator.

(Nonwoven fabric separator)

The nonwoven fabric separator of this embodiment may be obtained by cutting a nonwoven fabric manufactured in the above manner to a predetermined size. This may be used directly as a separator, or this may be subjected to surface active agent treatment, corona discharge treatment, plasma processing, UV ozone treatment, fluorine gas treatment, etc. in order to improve initial electrolyte-absorbing property.

In manufacturing an alkaline storage battery, the nonwoven fabric separator with a low initial electrolyte-absorbing property, for example, must undergo vacuum impregnation, centrifugal impregnation, or a combination thereof when injecting an electrolyte solution into a battery case, and since the battery assembly process is complicated in any case, although various measures are possible, a certain amount of productivity will be sacrificed.

At the same time, by imparting an initial electrolyte-absorbing property to the nonwoven fabric separator, the step of vacuum impregnation, centrifugal impregnation, or a combination thereof may be omitted, the battery assembly process may be simplified, and productivity may be improved.

Since the nonwoven fabric of this embodiment includes 3.5 to 35 mass % of the maleic anhydride component, the ammonia trapping capacity may be 0.3 to 6.0 mmol/g. Use of the nonwoven fabric of this embodiment as an alkaline storage battery separator allows provision of an alkaline storage battery with little self-discharge.

(Manufacturing process of alkaline storage battery)

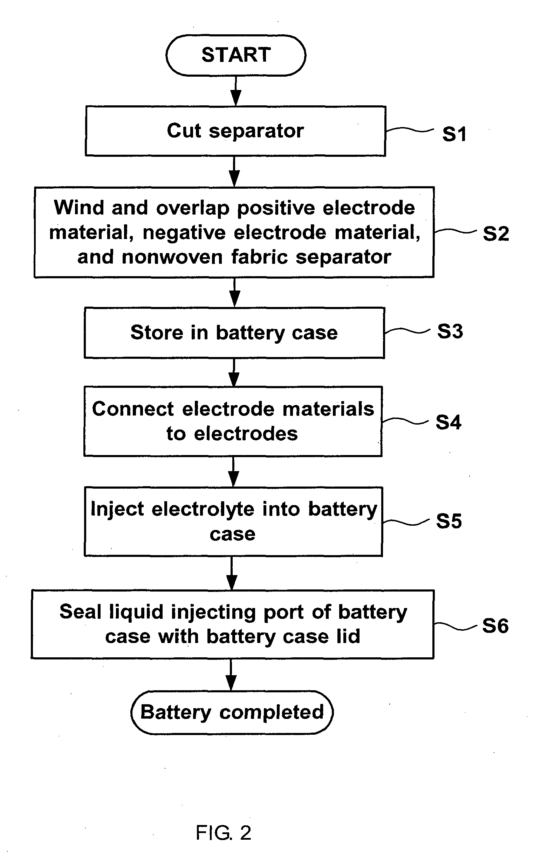

FIG. 2 is a drawing for describing a manufacturing process of an alkaline storage battery using the nonwoven fabric of this embodiment as a separator.

To begin with, in step S1, a nonwoven fabric separator manufactured by the spunbonding process, the melt blowing process or the wet-laid process, for example, is cut into a shape according to specifications of the battery.

Next, in step S2, a positive electrode material, a negative electrode material and the nonwoven fabric separator are wound and overlapped. Note that the positive electrode material, the negative electrode material and the nonwoven fabric separator may constitute an alternately layered structure, which is not limited thereto as long as the layered state is in accordance with the specifications of the battery.

In step S3, the layered positive electrode material, the nonwoven fabric separator, and the negative electrode material are stored in a battery case (battery can). In step S4, the positive electrode and the negative electrode of the electrode materials are electrically connected with the positive electrode and the negative electrode of the battery case, respectively, through welding or the like.

In step S5, electrolyte is injected into the battery case. Then, in step S6, a liquid injecting port of the battery case is sealed with a battery case lid or the like, thereby completing the battery.

Note that the manufacturing method of the alkaline storage battery is not limited to the above example, and detailed specification is not limited as long as it is a battery using the separator of this embodiment.

Working Examples

Evaluation items and evaluation methods of nonwoven fabric separators obtained in respective working examples and comparative examples are as given below.

(1) Spinning stability

Fiber spinning stability is determined by whether sheets have been made stably when manufacturing a nonwoven fabric using the spunbonding process or the melt blowing process.

(2) Fiber diameter

Fiber diameter is measured by observing the fiber or the nonwoven fabric using a scanning electron microscope.

(3) Thickness

Thickness is measured using a thickness measurement device in compliance with ISO534.

(4) Basis weight

Mass of a nonwoven fabric separator cut into a 50cm in cross direction and 50cm in machine direction is weighed and converted into mass per square meter ($g/m^2$).

(5) Wicking rate

A nonwoven fabric sample, 15 mm wide and 250 mm long is taken lengthwise. The sample is hung vertically and 3 mm or more from the bottom of the sample is immersed in a 30 mass % potassium hydroxide solution. Ten minutes later, the maximum length from the solution level to a portion where 30 mass % potassium hydroxide solution has permeated the sample is measured.

(6) Ammonia trapping capacity

Ammonia trapping capacity is measured in the following manner.
125 ml of 8 mol/l potassium hydroxide solution including 1.5 mmol ammonia and the separator sample (0.2 to 0.4g) whose mass W (g) has been precisely weighed are put in a 250 ml conical flask with a stopper, and the stopper is put on to tightly seal.
Meanwhile, a flask without placing a nonwoven fabric separator sample therein is prepared for a blank test. Contents of the flask including the nonwoven fabric separator sample and the blank test flask are stirred and then stored for two hours at 40°C. Next, 100 ml of the solution is taken from the flasks and untrapped ammonia is measured by the Kjeldhal's technique.
That is, ammonia is distilled and collected in 20 ml of a 0.1 mol/l hydrochloric acid solution, remaining unneutralized hydrochloric acid solution is titrated using a 0.05 mol/l sodium hydroxide solution with 0.1 mass/volume percent of a methyl red alcoholic solution as an indicator, and the ammonia trapping capacity ATC (mmol/g) is calculated from the titrated value based on the following Equation (2).

$$ATC = (125/100) \times 0.05 \times f \times (Vs - Vb) / W \dots (2)$$

where f in Equation 2 denotes density factor of the sodium hydroxide solution used in titration, Vs denotes the titrated value (ml) of the sodium hydroxide solution taken when processing the sample, and Vb denotes the titrated value (ml) of the sodium hydroxide solution in the blank test.

(7) Capacity preservation rate

The resulting separator is used to manufacture a sealed nickel-metal hydride battery. As battery members, a sintered nickel electrode is used as the positive electrode, a sintered hydrogen storage alloy is used as the negative electrode, and a 30 mass % of potassium hydroxide solution is used as the electrolyte solution, where the electrolyte solution is impregnated in the nonwoven fabric separator by vacuum impregnation.

The fabricated sealed nickel-metal hydride battery is initially activated by being charged and discharged alternately and repeatedly for ten cycles under conditions of charging at a 0.1C charge rate for 12 hours, pausing for 0.5 hours, and discharging at a 0.1C discharge rate, until a final voltage of 1.0V is reached.

The initially activated sealed nickel-metal hydride battery is subjected to 5 repeated activation cycles, each including charging at a 0.1C charge rate for 12 hours, pausing for 0.5 hours, and discharging at a 0.1C discharge rate until a final voltage of 1.0V is reached. Ratio, to the resulting discharge capacity, of the remaining capacity (at a 0.1C discharge rate and final voltage of 1.0 V) resulting from charging the battery under the same condition (at a 0.1C charge rate) and then leaving it as is for 14 days at 45°C is defined as a capacity preservation rate after self-discharge. Note that all charging and discharging are performed at 25°C.

(Working Example 1)

A blend (maleic anhydride component content: 3.5 mass %) made by mixing crystalline polypropylene as the crystalline polyolefin, low crystalline polypropylene (degree of crystallinity: 10%) as the low crystalline polyolefin, and maleic anhydride-modified polypropylene (maleic anhydride component content: 21.0 mass %) as the maleic anhydride-modified crystalline polyolefin, in a mass ratio of 82.5 : 1.0 : 16.5 respectively, is spun into fibers through the spunbonding process at a temperature of 230°C, stretched, and made into a sheet. The fibers are then bonded through thermal calendering, thereby obtaining a nonwoven fabric separator having a fiber diameter of 8 $\mu$m, thickness of 123 $\mu$m, and basis weight of 50 g/m$^2$.

As a result of measuring properties using this nonwoven fabric separator, the ammonia trapping capacity is 0.51 mmol/g, the wicking rate is 3 mm/10 min, and the ammonia trapping function is good. The capacity retention of the sealed nickel-metal hydride battery using this nonwoven fabric separator is 72%.

(Working Example 2)

A blend (maleic anhydride component content: 34.7 mass %) made by mixing crystalline polypropylene as the crystalline polyolefin, low crystalline polypropylene (degree of crystallinity: 30%) as the low crystalline polyolefin, and maleic anhydride-modified polypropylene (maleic anhydride component content: 38.5 mass %) as the maleic anhydride-modified crystalline polyolefin, in a mass ratio of 1.0 : 9.0 : 90.0 respectively, is spun into fibers using the melt blowing process at a temperature of 230°C, stretched, and made into a sheet. The fibers are then bonded through thermal calendering, thereby obtaining a nonwoven fabric separator having a fiber diameter of 3 $\mu$m, thickness of 126 $\mu$m, and basis weight of 53 g/m$^2$.

As a result of measuring properties using this nonwoven fabric separator, the ammonia trapping capacity is 5.60 mmol/g, the wicking rate is 9 mm/10 min, and the ammonia trapping function is good. The capacity retention of the sealed nickel-metal hydride battery using this nonwoven fabric separator is 92%.

(Working Example 3)

A blend (maleic anhydride component content: 19.3 mass %) made by mixing crystalline polypropylene as the crystalline polyolefin, low crystalline polybutene-1 (degree of crystallinity: 40%) as the low crystalline polyolefin, and maleic anhydride-modified polypropylene (maleic anhydride component content: 38.5 mass %) as the maleic anhydride-modified crystalline polyolefin, in a mass ratio of 45.0 : 5.0 : 50.0 respectively, is spun into fibers through the spunbonding process at a temperature of 240°C, stretched, and made into a sheet. The fibers are then bonded through thermal calendering, thereby obtaining a nonwoven fabric separator having a fiber diameter of 10 $\mu$m, thickness of 131 $\mu$m, and basis weight of 55 g/m$^2$.

As a result of measuring properties using this nonwoven fabric separator, the ammonia trapping capacity is 3.10 mmol/g, the wicking rate is 6 mm/10 min, and the ammonia trapping function is good. The capacity retention of the sealed nickel-metal hydride battery using this nonwoven fabric separator is 84%.

(Working Example 4)

Regarding fibers for a wet-laid nonwoven fabric, a blend (maleic anhydride component content: 21.9 mass %) made by mixing crystalline polypropylene as the crystalline polyolefin, low crystalline polypropylene (degree of crystallinity: 20%) as the low crystalline polyolefin, and maleic anhydride-modified polypropylene (maleic anhydride component content: 38.5 mass %) as the maleic anhydride-modified crystalline polyolefin, in a mass ratio of 36.0 : 7.0 : 57.0 respectively, is melt-spun into fibers using a nozzle for fibers, and stretched, thereby obtaining a single component fiber having a fiber diameter of 12 $\mu$m.

This fiber is cut to a length of 5 mm and combined (maleic anhydride component content: 11.0 mass %) with a polyethylene-polypropylene sheath-core type conjugate fiber that is cut to a length of 5 mm and has a fiber diameter of 12 μm, in a mass ratio of 50 : 50 so as to obtain a nonwoven fabric separator having a thickness of 117 μm and basis weight of 40 g/m$^2$ through the wet-laid process.

As a result of measuring properties using this nonwoven fabric separator, the ammonia trapping capacity is 1.72 mmol/g, the wicking rate is 5 mm/10 min, and the ammonia trapping function is good. The capacity retention of the sealed nickel-metal hydride battery using this nonwoven fabric separator is 83%.

(Working Example 5)

Regarding fibers for a wet-laid nonwoven fabric, crystalline polypropylene is used as the crystalline polyolefin for a core component, and a blend of low crystalline polyethylene (degree of crystallinity: 15%) as the low crystalline polyolefin and maleic anhydride-modified polyethylene (maleic anhydride component content: 21.0 mass %) as the maleic anhydride-modified crystalline polyolefin in a mass ratio of 20 : 80 is used for a sheath component; they are melt-spun into fibers in a sheath-core mass ratio of 50 : 50 using a nozzle for sheath-core type conjugate fibers, and stretched, thereby obtaining a conjugate fiber (maleic anhydride component content: 8.4 mass %) having a fiber diameter of 14 μm.

This fiber is cut to a length of 5 mm and a nonwoven fabric separator having a thickness of 108 μm and basis weight of 40 g/m$^2$ is obtained through the wet-laid process. As a result of measuring properties using this nonwoven fabric separator, ammonia trapping capacity is 1.30 mmol/g, wicking rate is 4 mm/10 min, and ammonia trapping function is good. The capacity retention of the sealed nickel-metal hydride battery using this nonwoven fabric separator is 76%.

(Working Example 6)

A blend (maleic anhydride component content: 3.5 mass %) made by mixing a crystalline polyethylene-polypropylene copolymer as the crystalline polyolefin, a low crystalline polyethylene-polypropylene copolymer (degree of crystallization: 30%) as the low crystalline polyolefin, and a maleic anhydride-modified polyethylene-polypropylene copolymer (maleic anhydride component content: 38.5 mass %) as the maleic anhydride-modified crystalline polyolefin, in a mass ratio of 1.0 : 90.0 : 9.0 respectively, is spun into fibers through the spunbonding process at a temperature of 230°C, stretched, and made into a sheet. The fibers are then bonded through thermal calendering, thereby obtaining a nonwoven fabric separator having a fiber diameter of 10 μm, thickness of 139 μm, and basis weight of 51 g/m$^2$.

As a result of measuring properties using this nonwoven fabric separator, the ammonia trapping capacity is 0.53 mmol/g, the wicking rate is 2 mm/10 min, and the ammonia trapping function is good. The capacity retention of the sealed nickel-metal hydride battery using this nonwoven fabric separator is 73%.

(Comparative Example 1)

A blend (maleic anhydride component content: 2.9 mass %) made by mixing crystalline polypropylene, low crystalline polypropylene (degree of crystallinity: 30%), and maleic anhydride-modified polypropylene (maleic anhydride component content: 21.0 mass %) in a mass ratio of 85.0 : 1.0 : 14.0 respectively, is spun into fibers through the spunbonding process at a temperature of 220°C, stretched, and made into a sheet. The fibers are then bonded through thermal calendering, thereby obtaining a nonwoven fabric separator having a fiber diameter of 9 μm, thickness of 136 μm, and basis weight of 50 g/m$^2$.

As a result of measuring properties using this nonwoven fabric separator, the ammonia trapping capacity is 0.25 mmol/g, the wicking rate is 2 mm/10 min, and the ammonia trapping function is unsatisfactory. The capacity retention of the sealed nickel-metal hydride battery using this nonwoven fabric separator is 58%.

(Comparative Example 2)

Only maleic anhydride-modified polypropylene (maleic anhydride component content: 38.5 mass %) is spun into fibers by the melt blowing process at a temperature of 220°C, stretched, and made into a sheet. The fibers are then bonded through thermal calendering, however, the obtained sheet often generates a defect due to fiber breakage, and fiber spinning is inadequate.

(Comparative Example 3)

A blend (maleic anhydride component content: 5.0 mass %) made by mixing crystalline polypropylene, low crystalline polypropylene (degree of crystallinity: 30%), and maleic anhydride-modified polypropylene (maleic anhydride component content: 21.0 mass %) in a mass ratio of 75.5 : 0.5 : 24.0 respectively, is spun into fibers through the spunbonding process at a temperature of 230°C and stretched. However, the fibers are broken during the stretching process, therefore not making a sheet.

(Comparative Example 4)

A blend (maleic anhydride component content: 1.5 mass %) made by mixing crystalline polypropylene, low crystalline polypropylene (degree of crystallinity: 40%), and maleic anhydride-modified polypropylene (maleic anhydride component content: 38.5 mass %) in a mass ratio of 1.0 : 95.0 : 4.0 respectively, is spun into fibers through the spunbonding process at a temperature of 230°C, stretched, and made into a sheet. The fibers are then bonded through thermal calendering, thereby obtaining a nonwoven fabric separator having a fiber diameter of 10 $\mu$m, thickness of 142 $\mu$m, and basis weight of 45 g/m$^2$.

As a result of measuring properties using this nonwoven fabric separator, the ammonia trapping capacity is 0.12 mmol/g, the wicking rate is 1 mm/10 min, and the ammonia trapping function is unsatisfactory. The capacity retention of the sealed nickel-metal hydride battery using this nonwoven fabric separator is 42%.

(Conventional Example 1)

A blend (maleic anhydride component content: 5.0 mass %) made by mixing crystalline polypropylene and maleic anhydride-modified polypropylene (maleic anhydride component content: 21.0 mass %) in a mass ratio of 76.0 : 24.0 respectively, is spun into fibers through the spunbonding process at a temperature of 230°C and stretched. However, the fibers are broken during the stretching process, therefore not making a sheet.

(Conventional Example 2)

A blend (maleic anhydride component content: 3.2 mass %) made by mixing crystalline polypropylene and maleic anhydride-modified polypropylene (maleic anhydride component content: 16.8 mass %) in a mass ratio of 81.0 : 19.0 respectively, is spun into fibers through the spunbonding process at a temperature of 230°C, stretched, and made into a sheet. The fibers are then bonded through thermal calendering, thereby obtaining a nonwoven fabric separator having a fiber diameter of 30 $\mu$m, thickness of 146 $\mu$m, and basis weight of 51 g/m$^2$.

As a result of measuring properties using this nonwoven fabric separator, the ammonia trapping capacity is 0.27 mmol/g, the wicking rate is 1 mm/10 min, and the ammonia trapping function is unsatisfactory. The capacity retention of the sealed nickel-metal hydride battery using this nonwoven fabric separator is 60%.

Table 1 gives a list of evaluation results of resin blending ratio and properties in the above respective examples. Table 1 shows fiber spinning stability, fiber diameter, and ammonia trapping capacity, wicking rate, and capacity retention before an initial electrolyte-absorbing property is imparted, due to the maleic anhydride component content, and resin blending ratio of crystalline polyolefin, low crystalline polyolefin and maleic anhydride-modified polyolefin.

Table 1

| Item | Resin blending ratio (mass %) | | | | | | Maleic anhydride modified polyolefin | | | Maleic anhydride component content (mass %) | Fiber spinning stability | Manufacturing method | Fiber diameter (μm) | Thickness (μm) | Basis weight (g/m²) | ATC (mmol/g) | Wicking rate (mm/10min) | Capacity retention (%) |
|---|---|---|---|---|---|---|---|---|---|---|---|---|---|---|---|---|---|---|
| | Crystalline polyolefin | | Low crystalline polyolefin | | | | PP | PE | PP-PE | | | | | | | | | |
| | PP | PP-PE | PP | PE | PB | PP-PE | | | | | | | | | | | | |
| Working Example 1 | 82.5 | | 1.0 | | | | 16.5 | | | 3.5 | ○ | Spunbonding | 8 | 123 | 50 | 0.51 | 3 | 72 |
| Working Example 2 | 1.0 | | 9.0 | | | | 90.0 | | | 34.7 | ○ | Meltblowing | 3 | 126 | 53 | 5.60 | 9 | 33 |
| Working Example 3 | 45.0 | | | | 5.0 | | 50.0 | | | 19.3 | ○ | Spunbonding | 10 | 131 | 55 | 3.10 | 6 | 84 |
| Working Example 4 | 36.0 | | 7.0 | | | | 57.0 | | | 11.0 | ○ | Wet-laid process | 12 | 117 | 40 | 1.72 | 5 | 83 |
| Working Example 5 | 50.0 | | | 10.0 | | | | 40.0 | | 8.4 | ○ | Wet-laid process | 14 | 108 | 40 | 1.30 | 4 | 76 |
| Working Example 6 | | 1.0 | | | | 90.0 | | | 9.0 | 3.5 | ○ | Spunbonding | 10 | 109 | 51 | 0.53 | 2 | 73 |
| Comparative Example 1 | 85.0 | | 1.0 | | | | 14.0 | | | 2.9 | ○ | Spunbonding | 9 | 106 | 50 | 0.25 | 2 | 58 |
| Comparative Example 2 | | | | | | | 100.0 | | | 38.5 | × | Meltblowing | - | - | - | - | - | - |
| Comparative Example 3 | 75.5 | | 0.50 | | | | 24.0 | | | 5 | × | Spunbonding | 10 | 112 | 45 | 0.12 | 1 | 42 |
| Comparative Example 4 | 1.0 | | 95.0 | | | | 4.0 | | | 1.5 | ○ | Spunbonding | - | - | - | - | - | - |
| Conventional Example 1 | 76.0 | | | | | | 24.0 | | | 5 | × | Spunbonding | - | - | - | - | - | - |
| Conventional Example 2 | 81 | | | | | | 19.0 | | | 3.2 | ○ | Spunbonding | 20 | 145 | 51 | 0.27 | 1 | 80 |

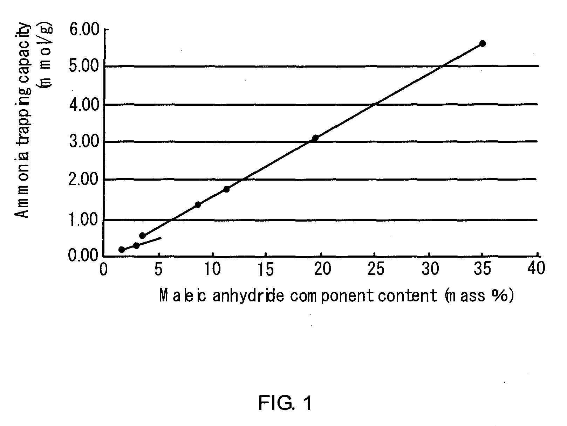

Relationship between maleic anhydride component content and ammonia trapping capacity of the nonwoven fabric separator is illustrated in FIG. 1.

Table 1 shows that a nonwoven fabric separator having good fiber spinning capability and a small fiber diameter may be manufactured by including low crystalline polyolefin, and that the obtained nonwoven fabric separator has high ammonia trapping function.

While the capacity retention shows high values of 70% or greater with the nonwoven fabric separators having 3.5 to 35 mass % of the maleic anhydride component, the nonwoven fabric separators having less than 3.5 mass % of maleic anhydride component shows low values of less than 70%.

However, all of the nonwoven fabric separators obtained in the respective working examples, comparative examples, and conventional examples result in a low initial electrolyte-absorbing property in the measurement of the wicking rate using a 30 mass % potassium hydroxide solution.

Therefore, to impart a low initial electrolyte-absorbing property, processing is conducted by the following methods, and the wicking rate, the ammonia trapping capacity and the capacity retention are then measured. Note that the samples of Comparative Examples 2 and 3 and Conventional Example 1 are unsuitable as nonwoven fabric separators because of defect repetition due to incapability of making sheets or inadequate fiber spinning in the nonwoven fabric manufacturing process, and are thus excluded.

(Working Example 7)

The nonwoven fabric separator obtained in Working Example 1 is processed in a 2% solution of anionic surfactant so as to obtain a nonwoven fabric separator imparted with an initial electrolyte-absorbing property. As a result of measuring using this nonwoven fabric separator, the ammonia trapping capacity is 0.50 mmol/g, the wicking rate is 72 mm/10 min, and the ammonia trapping function and the initial electrolyte-absorbing property are good.

The capacity retention of the sealed nickel-metal hydride battery using this nonwoven fabric separator is 71%.

(Working Example 8)

The nonwoven fabric separator obtained in Working Example 2 is processed in a 2% solution of anionic surfactant so as to obtain a nonwoven fabric separator imparted with an initial electrolyte-absorbing property. As a result of measuring using this nonwoven fabric separator, the ammonia trapping capacity is 5.55 mmol/g, the wicking rate is 90 mm/10 min, and the ammonia trapping function and the initial electrolyte-absorbing property are good. The capacity retention of the sealed nickel-metal hydride battery using this nonwoven fabric separator is 95%.

(Working Example 9)

The nonwoven fabric separator obtained in Working Example 3 is processed in a 2% solution of anionic surfactant so as to obtain a nonwoven fabric separator imparted with an initial electrolyte-absorbing property. As a result of measuring using this nonwoven fabric separator, the ammonia trapping capacity is 3.07 mmol/g, the wicking rate is 82 mm/10 min, and the ammonia trapping function and the initial electrolyte-absorbing property are good. The capacity retention of the sealed nickel-metal hydride battery using this nonwoven fabric separator is 85%.

(Working Example 10)

The nonwoven fabric separator obtained in Working Example 4 is processed through the corona discharge treatment at a processing density of 220 kW/ m$^2$/ min so as to obtain a nonwoven fabric separator imparted with an initial electrolyte-absorbing property. As a result of measuring using this nonwoven fabric separator, the ammonia trapping capacity is 1.74 mmol/g, the wicking rate is 79 mm/10 min, and the ammonia trapping function and the initial electrolyte-absorbing property are good. The capacity retention of the sealed nickel-metal hydride battery using this nonwoven fabric separator is 79%.

(Working Example 11)

The nonwoven fabric separator obtained in Working Example 5 is processed through the fluorine treatment using a mixed gas of fluorine whose concentration is 10 torr and oxygen whose concentration is 600 torr, so as to obtain a nonwoven fabric separator imparted with an initial electrolyte-absorbing property. As a result of measuring using this nonwoven fabric separator, the ammonia trapping capacity is 1.29 mmol/g, the wicking rate is 95 mm/10 min, and the ammonia trapping function and the initial electrolyte-absorbing property are good. The capacity retention of the sealed nickel-metal hydride battery using this nonwoven fabric separator is 77%.

(Working Example 12)

The nonwoven fabric separator obtained in Working Example 6 is processed in a 2% solution of anionic surfactant so as to obtain a nonwoven fabric separator imparted with an initial electrolyte-absorbing property. As a result of measuring using this nonwoven fabric separator, the ammonia trapping capacity is 0.53 mmol/g, the wicking rate is 76 mm/10 min, and the ammonia trapping function and the initial electrolyte-absorbing property are good. The capacity retention of the sealed nickel-metal hydride battery using this nonwoven fabric separator is 74%.

(Comparative Example 5)

The nonwoven fabric separator obtained in Comparative Example 1 is processed in a 2% solution of anionic surfactant so as to obtain a nonwoven fabric separator imparted with an initial electrolyte-absorbing property. As a result of measuring using this nonwoven fabric separator, the ammonia trapping capacity is 0.24 mmol/g, the wicking rate is 68 mm/10 min, and the initial electrolyte-absorbing property is good but the ammonia trapping function is unsatisfactory. The capacity retention of the sealed nickel-metal hydride battery using this nonwoven fabric separator is 55%.

(Comparative Example 6)

The nonwoven fabric separator obtained in Comparative Example 4 is processed in a 2% solution of anionic surfactant so as to obtain a nonwoven fabric separator imparted with an initial electrolyte-absorbing property. As a result of measuring using this nonwoven fabric separator, the ammonia trapping capacity is 0.15 mmol/g, the wicking rate is 70 mm/10 min, and the initial electrolyte-absorbing property is good but the ammonia trapping function is unsatisfactory. The capacity retention of the sealed nickel-metal hydride battery using this nonwoven fabric separator is 45%.

(Conventional Example 3)

The nonwoven fabric separator obtained in Conventional Example 2 is processed in a 2% solution of anionic surfactant so as to obtain a nonwoven fabric separator imparted with an initial electrolyte-absorbing property. As a result of measuring using this nonwoven fabric separator, the ammonia trapping capacity is 0.28 mmol/g, the wicking rate is 65 mm/10 min, and the initial electrolyte-absorbing property is good but the ammonia trapping function is unsatisfactory. The capacity retention of the sealed nickel-metal hydride battery using this nonwoven fabric separator is 59%.

Table 2 gives a list of the above evaluation results. Table 2 shows ammonia trapping capacity, wicking rate and capacity retention after an initial electrolyte-absorbing property is imparted.

Table 2

| | Hydrophilic treatment | ATC (mmol/g) | Wicking rate (mm/10min) | Capacity retention (%) |
|---|---|---|---|---|
| Working Example 7 | Surface active agent treatment | 0.50 | 72 | 71 |
| Working Example 8 | Surface active agent treatment | 5.55 | 90 | 95 |
| Working Example 9 | Surface active agent treatment | 3.07 | 82 | 85 |
| Working Example 10 | Corona discharge treatment | 1.74 | 79 | 79 |
| Working Example 11 | Fluorine treatment | 1.29 | 95 | 77 |
| Working Example 12 | Surface active agent treatment | 0.53 | 76 | 74 |
| Comparative Example 5 | Surface active agent treatment | 0.24 | 68 | 55 |
| Comparative Example 6 | Surface active agent treatment | 0.15 | 70 | 45 |
| Conventional Example 3 | Surface active agent treatment | 0.28 | 65 | 59 |

Performing the hydrophilic treatment provides a nonwoven fabric separator with a good initial electrolyte-absorbing property. Moreover, even if the hydrophilic treatment is performed, the resulting separator does not hinder the ammonia trapping function.

Furthermore, while the capacity retention shows high values of 70% or greater with the nonwoven fabric separators having 3.5 to 35 mass % of the maleic anhydride component, the capacity retention shows low values of less than 70% with the nonwoven fabric separators having less than 3.5 mass % of maleic anhydride component.

Industrial Applicability

The nonwoven fabric separator of the present invention can control self-discharge by developing a high level of ammonia trapping function as a result of including a range of 3.5 to 35 mass % of the maleic anhydride component and 1.0 mass % or greater of low crystalline polyolefin on a mass basis of the nonwoven fabric.

Therefore, the nonwoven fabric separator of the present invention is applicable as a separator for electrochemical devices such as an alkaline storage battery.

**Claims**

1.   A polyolefin resin available as a nonwoven fabric raw material comprising maleic anhydride-modified polyolefin, low crystalline polyolefin, and crystalline polyolefin.

2.   The polyolefin resin according to claim 1, wherein the resin includes 3.5 to 35 mass % of a maleic anhydride component.

3.   The polyolefin resin according to claim 1 or claim 2, wherein the resin includes 1.0 to 90 mass % of the low crystalline polyolefin.

4.   The polyolefin resin according to claim 3, wherein the low crystalline polyolefin is any one of polyethylene, polypropylene, polybutene, polymethylpentene, an ethylene-propylene copolymer, an ethylene-butene copolymer, a propylene-butene copolymer, or an ethylene-propylene-butene copolymer.

5.   The polyolefin resin according to any one of claim 1 to claim 4, wherein the low crystalline polyolefin is a polyolefin resin having less than 50 percent degree of crystallinity.

6.   A polyolefin fiber fabricated by spinning fibers from the polyolefin resin of any one of claim 1 to claim 5.

7.   The polyolefin fiber according to claim 6, wherein fiber diameter is 15 $\mu$m or less.

8.   A nonwoven fabric using the polyolefin fiber of either claim 6 or claim 7.

9.   The nonwoven fabric according to claim 8, the nonwoven fabric is fabricated by any one of manufacturing methods of a spunbonding process, a melt blowing process, or a wet-laid process.

10.   The nonwoven fabric according to claim 8 or claim 9, wherein at least one type of processing selected from a group of a surface active agent treatment, a corona discharge treatment, plasma processing, a UV ozone treatment, and a fluorine gas treatment is carried out.

11.   The nonwoven fabric according to any one of claim 8 to claim 10, wherein the nonwoven fabric is constituted by a fiber having a fiber diameter of 1 to 15 $\mu$m and has an ammonia trapping capacity of 0.3 to 6.0 mmol/ g.

12.   An alkaline storage battery using the nonwoven fabric of any one of claim 8 to claim 11 as a separator.

FIG. 1

FIG. 2

## INTERNATIONAL SEARCH REPORT

| International application No. |
|---|
| PCT/JP2012/065223 |

A. CLASSIFICATION OF SUBJECT MATTER
*D01F6/46*(2006.01)i, *C08L23/00*(2006.01)i, *D04H1/544*(2012.01)i, *H01M2/16*
(2006.01)i

According to International Patent Classification (IPC) or to both national classification and IPC

B. FIELDS SEARCHED

Minimum documentation searched (classification system followed by classification symbols)
D01F1/00-6/96, C08L1/00-101/14, D04H1/00-18/04, H01M2/14-2/18

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-530503 A  (BBA Nonwovens Simpsonville Inc.), 17 September 2002 (17.09.2002), claims 1, 9, 11 to 14; paragraphs [0003], [0004], [0022], [0023], [0027], [0035], [0037] & US 6153701 A          & EP 1161492 A1 & WO 2000/031181 A1      & CN 1331725 A | 1–12 |
| A | JP 60-133576 U  (Chisso Corp.), 05 September 1985 (05.09.1985), entire text (Family: none) | 1–12 |
| A | JP 1-319251 A  (Hiroyuki KANAI), 25 December 1989 (25.12.1989), entire text (Family: none) | 1–12 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 September, 2012 (03.09.12) | 11 September, 2012 (11.09.12) |

| Name and mailing address of the ISA/ Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2012/065223

C (Continuation).    DOCUMENTS CONSIDERED TO BE RELEVANT

| Category* | Citation of document, with indication, where appropriate, of the relevant passages | Relevant to claim No. |
|---|---|---|
| A | JP 6-128858 A  (Mitsui Petrochemical Industries, Ltd.),<br>10 May 1994 (10.05.1994),<br>entire text<br>& US 5409766 A          & EP 594123 A1<br>& KR 10-0252534 B1      & CN 1092484 A | 1-12 |
| A | JP 5-163648 A  (Mitsui Petrochemical Industries, Ltd.),<br>29 June 1993 (29.06.1993),<br>entire text<br>& US 5306545 A          & EP 546837 A1<br>& KR 10-1994-0011591 B1 | 1-12 |
| A | JP 2004-225221 A  (Japan Vilene Co., Ltd.),<br>12 August 2004 (12.08.2004),<br>entire text<br>(Family: none) | 1-12 |
| A | JP 3-223356 A  (Idemitsu Petrochemical Co., Ltd.),<br>02 October 1991 (02.10.1991),<br>entire text<br>(Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000164193 A
- JP 2001043843 A
- JP 2001068087 A
- JP H10125300 A
- JP H0732008 A

- JP 2715153 B
- JP 2762443 B
- JP 2904856 B
- JP 2007308839 A

**Non-patent literature cited in the description**

- **PATRIC LEBLANC et al.** *J. Electrochem.,* 1998, vol. 145 (3), 844-847

- Battery Handbook. 2001, 237-238